# EUROPÄISCHE PATENTSCHRIFT

(11) **EP 0 943 507 B1**
(45) Veröffentlichungstag und Bekanntmachung des Hinweises auf die Patenterteilung: **26.05.2004**
(21) Anmeldenummer: 99104090.8
(22) Anmeldetag: 18.03.1999
(51) Int. Cl.: B60R 22/46

(54) **Gurtaufroller für ein Fahrzeug-Sicherheitsgurtsystem**
Belt retractor for a vehicle seat belt sytem
Rétracteur de sangle pour un système de ceinture de sécurité de véhicule

(30) Priorität: 20.03.1998 DE 29805084 U
(43) Veröffentlichungstag der Anmeldung: 22.09.1999
(73) Patentinhaber: TRW Automotive GmbH, 73553 Alfdorf (DE)
(72) Erfinder: Biller, Joachim, 73547 Lorch (DE); Holbein, Wolfgang, 73553 Alfdorf (DE)
(74) Vertreter: Sties, Jochen, Dipl.-Ing.

(56) Entgegenhaltungen:
- EP-A- 0 827 883
- DE-U- 29 517 946
- US-A- 4 666 097
- US-A- 5 462 340
- PATENT ABSTRACTS OF JAPAN vol. 014, no. 060 (M-0931), 5. Februar 1990 (1990-02-05) -& JP 01 285440 A (HONDA MOTOR CO LTD), 16. November 1989 (1989-11-16)

## Beschreibung

Die Erfindung betrifft einen Gurtaufroller für ein Fahrzeug-Sicherheitsgurtsystem, mit einer Gurtspule, die den Sicherheitsgurt aufnimmt, einem Gurtstraff-Mechanismus, der die Gurtspule in der Gurtband-Aufwickelrichtung beaufschlagen kann, und einem Sensor, der den Gurtstraff-Mechanismus auslösen kann und mit einer Sicherheitseinrichtung versehen ist, die durch Montage des Gurtaufrollers in einem Fahrzeug aus einem Sicherungszustand, in welchem der Sensor blockiert ist, in einen Freigabezustand überführbar ist, in welchem der Sensor auslösebereit ist, wobei die Sicherheitseinrichtung ein Sensorblockierelement aufweist, das zwischen einer Blockierstellung, in welcher der Sensor blockiert ist, und einer Freigabestellung bewegbar ist, in welcher der Sensor auslösebereit ist.

Ein solcher Gurtaufroller ist beispielsweise aus der europäischen Patentanmeldung 0 456 853 bekannt. Der Gurtstraff-Mechanismus, der im Bedarfsfall vom Sensor ausgelöst wird, dient dazu, durch Drehung der Gurtspule in der Gurtband-Aufwickelrichtung die sogenannte Gurtlose aus dem Sicherheitsgurtsystem zu beseitigen, damit ein Fahrzeuginsasse ab dem frühestmöglichen Zeitpunkt an der Verzögerung des Fahrzeugs teilnimmt. Um eine Auslösung des Gurtstraff-Mechanismus während des Transports des Gurtaufrollers vor der Montage im Fahrzeug zu verhindern, ist das Sensorblockierelement vorgesehen, das in seiner Blockierstellung eine Trägheitsmasse des Sensors blockiert. Das Sensorblockierelement wird in seine Freigabestellung überführt, wenn der Gurtaufroller im Fahrzeug angebracht wird. Dies kann beispielsweise mittels eines Taststiftes geschehen, der bei der Montage des Gurtaufrollers an einem Teil des Fahrzeugs zur Anlage gelangt und in das Gehäuse des Gurtaufrollers hineingedrückt wird.

Nachteilig bei diesem bekannten Gurtaufroller ist, daß keine Möglichkeit vorgesehen ist, eine Aktivierung des Gurtstraffmechanismus zu verhindern, wenn der Sicherheitsgurt gar nicht benutzt wird. Falls es zu einem Unfall kommt, wird der Gurtstraff-Mechanismus also auch dann betätigt, wenn beispielsweise der entsprechende Gurtaufroller für den Beifahrersitz vorgesehen ist und der Beifahrersitz unbesetzt ist.

Die Aufgabe der Erfindung besteht darin, einen Gurtaufroller der eingangs genannten Art zu schaffen, bei dem in einfacher Weise eine Transportsicherung, die ein Aktivieren des Gurtstraff-Mechanismus verhindert, wenn der Gurtaufroller nicht in ein Fahrzeug eingebaut ist, mit einem Belegungssensor kombiniert ist, der ein Auslösen des Gurtstraff-Mechanismus verhindert, wenn der Sicherheitsgurt des Gurtaufrollers nicht verwendet wird.

Zu diesem Zweck ist bei einem Gurtaufroller der eingangs genannten Art vorgesehen, daß die Sicherheitseinrichtung zusätzlich ein Transportsicherungselement und ein Tastelement aufweist, daß das Tastelement den Durchmesser des sich auf der Gurtspule befindenden Gurtbandwickels abtastet und eine Bewegung des Sensorblockierelements in die Freigabestellung erst ermöglicht, wenn ein vorbestimmter Durchmesser unterschritten ist, daß das Transportsicherungselement zwischen einer Sicherungsstellung und einer Freigabestellung bewegbar ist, wobei eine Feder vorgesehen ist, die das Transportsicherungselement in die Sicherungsstellung beaufschlagt, daß eine Feder vorgesehen ist, die das Sensorblockierelement in die Freigabestellung beaufschlagt, und daß das Transportsicherungselement einen Halteabschnitt aufweist, der in der Sicherungsstellung an einem Arretierabschnitt des Sensorblockierelements angreift und dieses in der Blockierstellung hält. Bei dieser Gestaltung dient mit dem Sensorblockierelement ein und dasselbe Bauteil dazu, die Auslösung des Gurtstraff-Mechanismus sowohl dann, wenn der Gurtaufroller nicht in einem Fahrzeug eingebaut ist, als auch dann zu verhindern, wenn der entsprechende Sicherheitsgurt nicht verwendet wird. Dies führt zu einem besonders geringen Bauaufwand.

Gemäß einer bevorzugten Ausführungsform der Erfindung ist vorgesehen, daß das Transportsicherungselement und das Sensorblockierelement als Schieber ausgebildet sind. Auf diese Weise läßt sich die erforderliche zuverlässige Lagerung dieser beiden Teile in vergleichsweise einfacher Weise ausbilden. Eine Lagerung mit Translation gewährleistet mit großer Sicherheit, daß auch nach einer Lebensdauer von bis zu 15 Jahren alle Bauteile noch in der gewünschten Weise funktionieren, so daß der Sensor automatisch dann gesichert wird, wenn der Gurtaufroller wieder aus dem Fahrzeug ausgebaut wird.

Gemäß dieser bevorzugten Ausführungsform ist weiterhin vorgesehen, daß die Federn Druckfedern sind. Dies bietet eine höhere Sicherheit als die Blattfedern, die üblicherweise im Stand der Technik verwendet werden. Blattfedern setzen sich nämlich während der langen Zeit, die ein Gurtaufroller im Fahrzeug eingebaut sein kann, mehr als Druckfedern, so daß durch die Verwendung von Druckfedern mit höherer Sicherheit gewährleistet ist, daß der Sensor auch beim Ausbau des Gurtaufrollers wieder gesichert wird.

Vorteilhafte Ausgestaltungen der Erfindung ergeben sich aus den Unteransprüchen.

Die Erfindung wird nachfolgend unter Bezugnahme auf eine bevorzugte Ausführungsform beschrieben, die in den beigefügten Zeichnungen dargestellt ist. In diesen zeigen:
- Figur 1 eine schematische Ansicht eines erfindungsgemäßen Gurtaufrollers gemäß einer ersten Ausführungsform, wobei der Gurtstraff-Mechanismus zur besseren Übersichtlichkeit nicht gezeigt ist;
- Figur 2 eine Seitenansicht des Gurtaufrollers von Figur 1 mit dem Gurtstraff-Mechanismus;
- Figur 3 eine andere Seitenansicht des Gurtaufrollers von Figur 2;
- Figur 4 dieselbe Ansicht wie in Figur 1, wobei jedoch einige Gehäuseteile weggelassen wurden;
- die Figuren 5 bis 8 Ansichten entsprechend denjenigen der Figuren 1 bis 4, wobei sich der Gurtaufroller in einem zweiten Zustand befindet;
- die Figuren 9 bis 12 Ansichten entsprechend denjenigen der Figuren 1 bis 4, wobei sich der Gurtaufroller in einem dritten Zustand befindet;
- die Figuren 13 bis 16 Ansichten entsprechend denjenigen der Figuren 1 bis 4, wobei sich der Gurtaufroller in einem vierten Zustand befindet;
- Figur 17 eine Schnittansicht eines Sensors, der bei einem erfindungsgemäßen Gurtaufroller verwendet werden kann und sich in einer Ruhestellung befindet;
- Figur 18 eine Ansicht des Sensors von Figur 17, in welcher dieser sich in einer Auslösestellung befindet;
- Figur 19 eine schematische Ansicht eines erfindungsgemäßen Gurtaufrollers gemäß einer zweiten Ausführungsform;
- Figur 20 eine Ansicht des Sensors von Figur 19, wobei sich der Gurtaufroller in einem zweiten Zustand befindet;
- Figur 21 eine Ansicht des Sensors von Figur 19, wobei sich der Gurtaufroller in einem dritten Zustand befindet;
- Figur 22 eine schematische Ansicht eines erfindungsgemäßen Gurtaufrollers gemäß einer dritten Ausführungsform;
- Figur 23 eine Ansicht des Sensors von Figur 22, wobei sich der Gurtaufroller in einem zweiten Zustand befindet;
- Figur 24 eine Ansicht des Sensors von Figur 22, wobei sich der Gurtaufroller in einem dritten Zustand befindet.

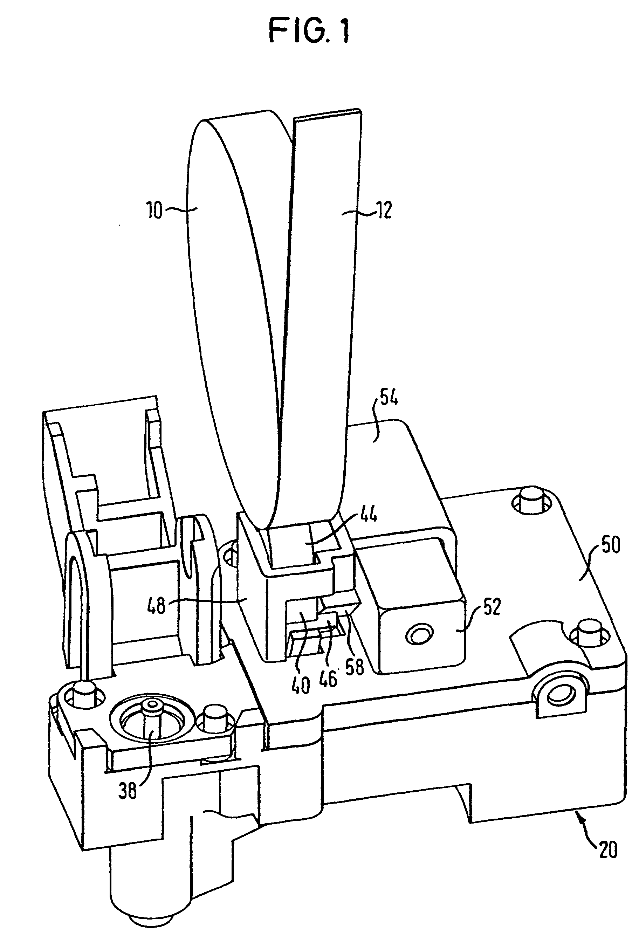

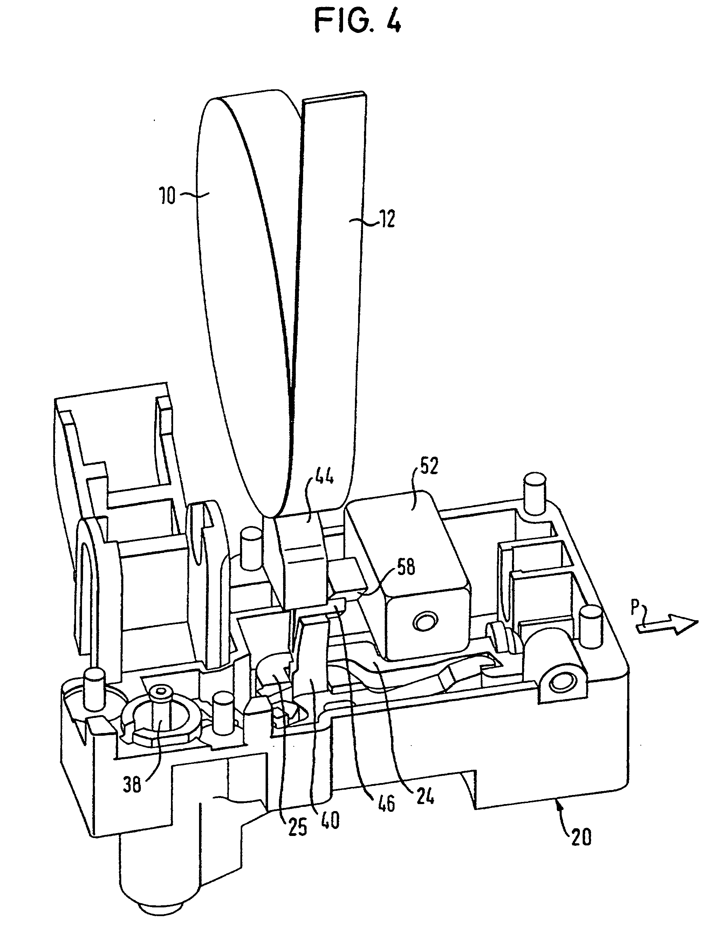

In den Figuren 1 bis 4 ist schematisch ein Gurtaufroller gemäß einer ersten Ausführungsform der Erfindung gezeigt, wobei in den Figuren 1 und 4 zur besseren Übersichtlichkeit die Teile des Gurtaufrollers weggelassen wurden, die zum Verständnis der Erfindung nicht erforderlich sind. Der Gurtaufroller enthält eine Gurtspule, die schematisch mittels des auf ihr aufgenommenen Gurtbandwickels 10 angedeutet ist. Ausgehend von diesem Gurtbandwickel verläuft der Sicherheitsgurt 12, der einem Fahrzeuginsassen zur Verfügung steht. Die Gurtspule ist drehbar in einem Rahmen 14 gelagert, der mittels eines Gewindefortsatzes 16, in welchen eine Befestigungsschraube eingreifen kann, an einem Fahrzeug befestigt werden kann.

In einem Gehäuse ist ein im einzelnen nicht dargestellter Gurtstraff-Mechanismus 18 vorgesehen, der nach Aktivierung die Gurtspule und damit den Gurtbandwickel 10 in der Gurtband-Aufwickelrichtung drehen kann, so daß die Gurtlose eines Sicherheitsgurtsystem aufgenommen wird. Der Gurtstraff-Mechanismus kann von beliebiger Ausgestaltung sein; es kann sich beispielsweise um einen pyrotechnisch angetriebenen Linearantrieb handeln, der über ein Zugseil oder eine Zahnstange auf die Gurtspule einwirkt, oder um einen Rotationskolbenantrieb. Die spezielle Ausgestaltung ist für das Verständnis der Erfindung nicht von Interesse.

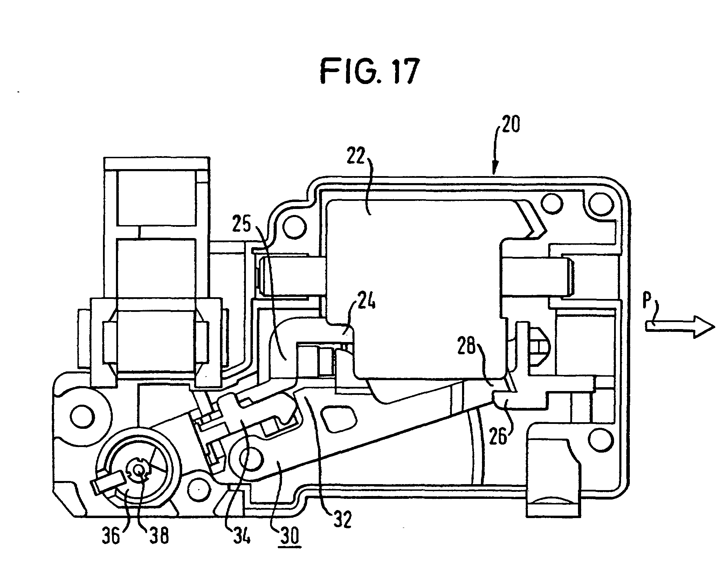

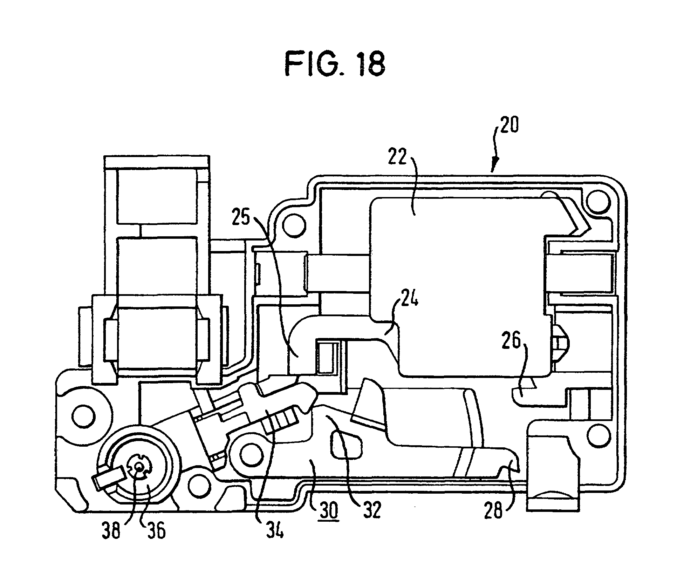

Der Gurtstraff-Mechanismus wird im Bedarfsfall von einem mechanischen Sensor 20 (siehe auch Figuren 17 und 18) ausgelöst. Der Sensor 20 weist eine translationsverschiebbare Trägheitsmasse 22 auf, die aus ihrer in Figur 17 gezeigten Ruhestellung mittels einer in Richtung des Pfeils P wirkenden Verzögerung in ihre in Figur 18 gezeigte Auslösestellung bewegt werden kann.

Der Sensor enthält weiterhin ein Zwischenelement 24, das verschiebbar angebracht ist und, nachdem die Trägheitsmasse 22 einen vorbestimmten Leerhub aus ihrer Ruhestellung hin zur Auslösestellung zurückgelegt hat, von dieser mitgenommen wird.

Das Zwischenelement 24 ist mit einer Nase 25, deren Funktion später erläutert wird, und einem Vorsprung 26 versehen, an welchem sich in der Ruhestellung das freie Ende 28 eines Abstützhebels 30 abstützt. An einem Vorsprung 32 des Abstützhebels 30 stützt sich ein Stößel 34 ab, der mit einem konischen Ende an einem Sperrkonus 36 eines Schlagbolzens 38 anliegt. In der in Figur 17 gezeigten Ruhestellung hält der Stößel 34 den Schlagbolzen 38 in einer vorgespannten Stellung. Wenn die Trägheitsmasse 22 aus ihrer Ruhestellung in die Auslösestellung verschoben wird, wird, nachdem der Leerweg der Trägheitsmasse überwunden wurde, zuerst das Zwischenelement 24 mitgenommen. Nachdem dieses einen vorbestimmten Weg zurückgelegt hat, wird das freie Ende 28 des Abstützhebels 30 freigegeben. Daraufhin kann der Stößel 34 aus seiner in Figur 17 gezeigten Stellung herausbewegt werden, da er von einer Schubwirkung beaufschlagt wird, die sich durch Anlage des konischen Endes des Stößels am Sperrkonus 36 des Schlagbolzens 38 ergibt. Nachdem der Stößel ausreichend weit verschoben ist, kann der Schlagbolzen auf einen nicht dargestellten Zünder des Gurtstraff-Mechanismus einwirken, woraufhin dieser aktiviert wird.

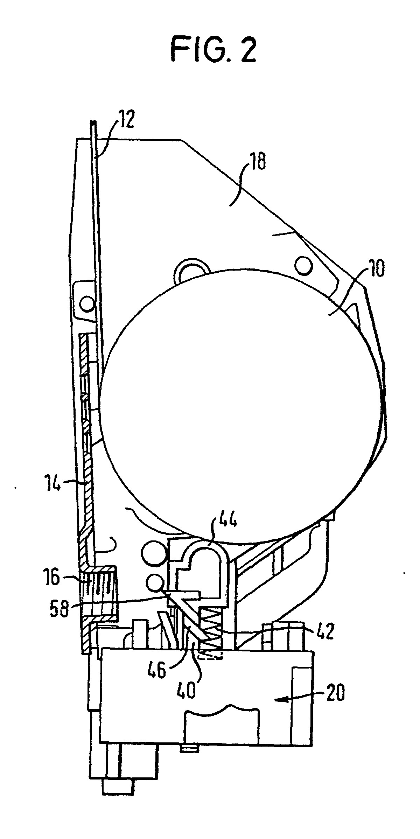

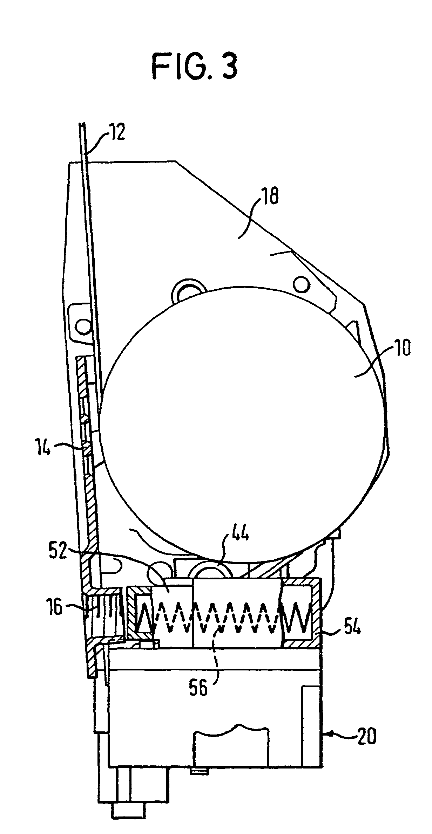

Es ist eine Sicherheitseinrichtung vorgesehen, die gewährleistet, daß der Gurtstraff-Mechanismus nur dann aktiviert werden kann, wenn der Gurtaufroller vorschriftsmäßig im Fahrzeug eingebaut und außerdem der vom Gurtaufroller aufgenommene Sicherheitsgurt von einem Fahrzeuginsassen angelegt ist. Diese Sicherheitseinrichtung enthält ein als Sensorblokkierschieber ausgebildetes Sensorblockierelement 40, das translationsverschiebbar im Sensor 20 angebracht ist. Der Sensorblockierschieber 40 kann zwischen einer Blockierstellung, in der er an der Nase 25 des Zwischenelementes 24 angreift und dieses in seiner in Figur 17 gezeigten Stellung hält, und einer Freigabestellung bewegt werden, in der das Zwischenelement 24 aus seiner in Figur 17 gezeigten Stellung in seine in Figur 18 gezeigte Stellung überführt werden kann. Der Sensorblockierschieber 40 wird von einer Druckfeder 42 in seine Freigabestellung beaufschlagt, in welcher er bezüglich den Figuren 2 und 3 weiter aus dem Sensor 20 hervorsteht als in seiner Blockierstellung. An seinem vom Zwischenelement 24 abgewandten Ende ist der Sensorblockierschieber 40 mit einem Tastelement 44 versehen, das als einstückig mit dem Sensorblockierschieber 40 ausgebildete Nase ausgeführt ist. Das Tastelement 44 dient dazu, den Durchmesser des Gurtbandwickels 10 abzutasten.

Weiterhin ist am Sensorblockierschieber 40 ein Arretierabschnitt 46 ausgebildet, der eine in einem Winkel von 45° zur Verstellrichtung des Sensorblockierschiebers verlaufende Fläche aufweist. Um das Tastelement 44 herum ist eine Führung 48 vorgesehen, die auf einem Dekkel 50 des Sensors 20 angebracht ist.

Am Sensor 20 ist außerdem ein als Transportsicherungsschieber 52 ausgebildetes Transportsicherungselement vorgesehen, das dazu dient, den Sensor 20 zu sperren, wenn der Gurtaufroller nicht vorschriftsmäßig in einem Fahrzeug eingebaut ist. Der Transportsicherungsschieber 52 ist translationsverschiebbar zwischen einer Sicherungsstellung und einer Freigabestellung in einer Führung 54 angebracht, die ebenfalls auf dem Deckel 50 des Sensors 20 ausgebildet ist. Der Transportsicherungsschieber 52 wird von einer Druckfeder 56 in seine Sicherungsstellung hin zum Gewindefortsatz 16 beaufschlagt. Die Vorspannung der Feder 56 des Transportsicherungsschiebers 52 ist größer als die Vorspannung der Feder 42 des Sensorblokkierschiebers 40. Der Transportsicherungsschieber 52 kann aus dieser Sicherungsstellung heraus in einer Richtung senkrecht zur Bewegungsrichtung des Sensorblockierschiebers 40 bezüglich Figur 3 nach rechts in die Freigabestellung verstellt werden. Am Transportsicherungsschieber 52 ist ein Halteabschnitt 58 ausgebildet, der eine bezüglich der Bewegungsrichtung des Transportsicherungsschiebers 52 im Winkel von 45° ausgerichtete Fläche aufweist. Diese Fläche ist parallel zu der Fläche des am Sensorblockierschieber 40 ausgebildeten Arretierabschnitts 46 ausgerichtet.

In den Figuren 1 bis 4 ist der Gurtaufroller in einem Zustand gezeigt, in welchem er nicht in ein Fahrzeug eingebaut ist und in welchem kein Gurtband vom Gurtaufroller abgezogen ist. Der Gurtbandwickel 10 hat also seinen maximalen Durchmesser. In diesem Zustand befindet sich der Transportsicherungsschieber 52 in seiner Sicherungsstellung in Anlage am Gewindefortsatz 16, in der sich der Halteabschnitt 58 am Arretierabschnitt 46 des Sensorblockierschiebers 40 abstützt. Da die beiden aneinander anliegenden Flächen des Halteabschnitts und des Arretierabschnitts 46 im Winkel von 45° zur Bewegungsrichtung des Transportsicherungsschiebers 52 bzw. des Sensorblockierschiebers 40 geneigt sind, wird der Sensorblockierschieber 40 entgegen der Beaufschlagung durch seine Feder 42 in die Blockierstellung gedrückt, in der das Zwischenelement 24 in der in Figur 17 gezeigten Stellung gesichert ist. Gleichzeitig liegt das Tastelement 44 am Gurtbandwickel 10 an. Das Tastelement 44 ist so bemessen, daß in diesem Zustand der Sensorblockierschieber 40 vom Gurtbandwickel 10 über das Tastelement 44 in die Blockierstellung gedrückt wird. Der Sensorblockierschieber 40 wird also zweifach in seine Blockierstellung beaufschlagt: Zum einen vom Transportsicherungsschieber 52 über den Halteabschnitt 58 und den Arretierabschnitt 46 und zum anderen durch das Tastelement 44. Auf diese Weise ist sicher und zuverlässig verhindert, daß der Sensor bei Stößen, die während des Transportes oder der Handhabung des Gurtaufrollers auftreten können, den Gurtstraff-Mechanismus auslöst.

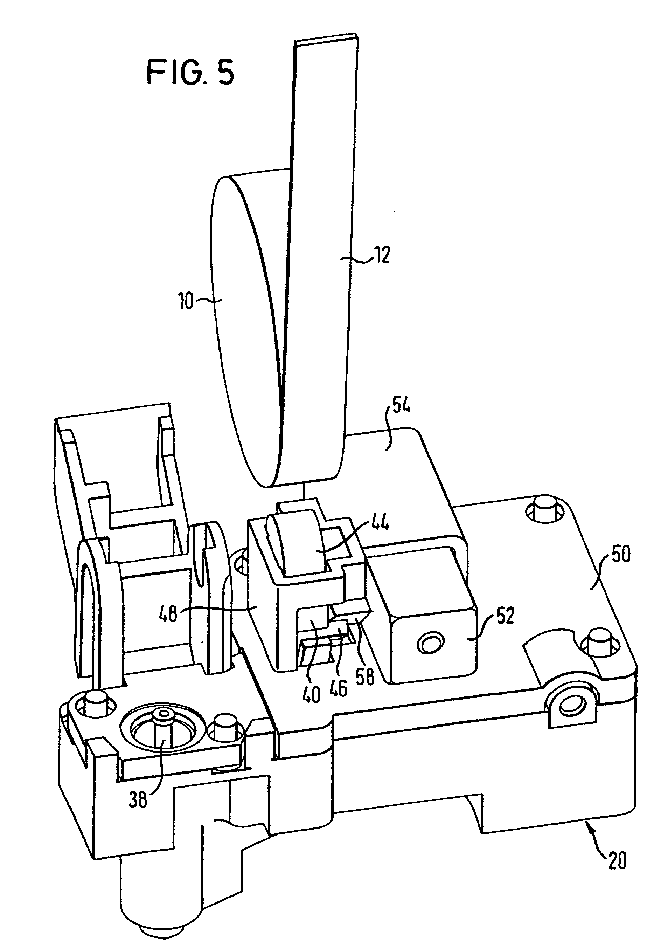

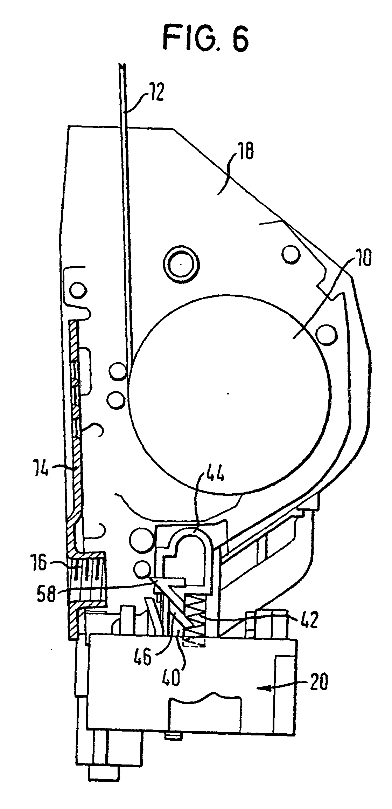

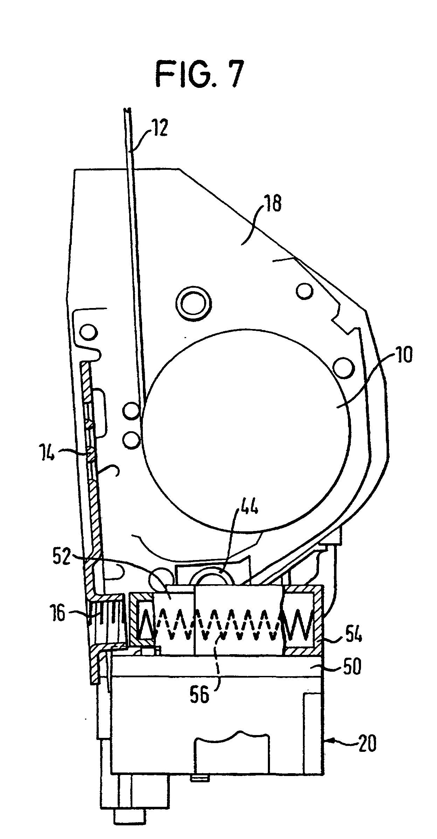

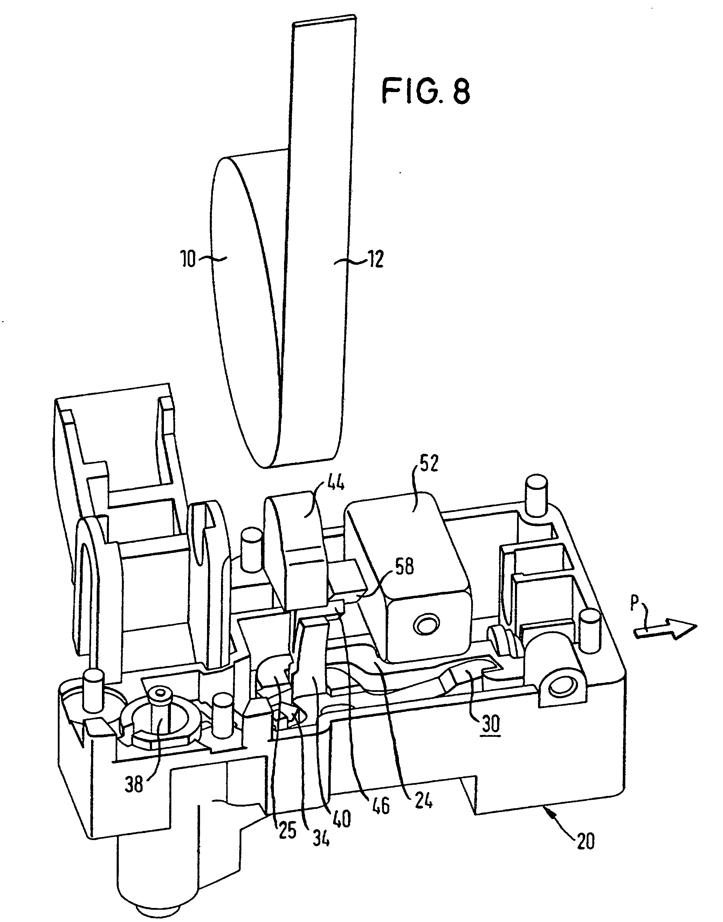

In den Figuren 5 bis 8 ist der Gurtaufroller in einem zweiten Zustand gezeigt. Für die aus den Figuren 1 bis 4 bekannten Bauteile werden dieselben Bezugszeichen verwendet, so daß auf die dortige Beschreibung verwiesen werden kann.

In diesem zweiten Zustand ist eine gewisse Menge Gurtband vom Gurtaufroller abgezogen. Der Gurtbandwickel 10 hat nunmehr einen kleineren Durchmesser, so daß das Tastelement 44 nicht mehr am Gurtbandwickel anliegt. Dennoch ist die Feder 42 des Sensorblockierschiebers 40 nicht in der Lage, diesen in die Freigabestellung zu überführen. Der Sensorblockierschieber 40 wird nämlich vom Transportsicherungsschieber 52 über den Halteabschnitt 58 und den Arretierabschnitt 46 in die Blockierstellung beaufschlagt, da die Vorspannung der Feder 56 des Transportsicherungselementes 52 größer ist als die Vorspannung der Feder 42 des Sensorblockierschiebers 40. Dies gewährleistet, daß auch dann, wenn während des Transports und der Handhabung des Gurtaufrollers Gurtband abgezogen wird, der Sensor sicher und zuverlässig gegen eine Auslösung des Gurtstraff-Mechanismus gesichert ist, solange der Gurtaufroller nicht in ein Fahrzeug eingebaut ist.

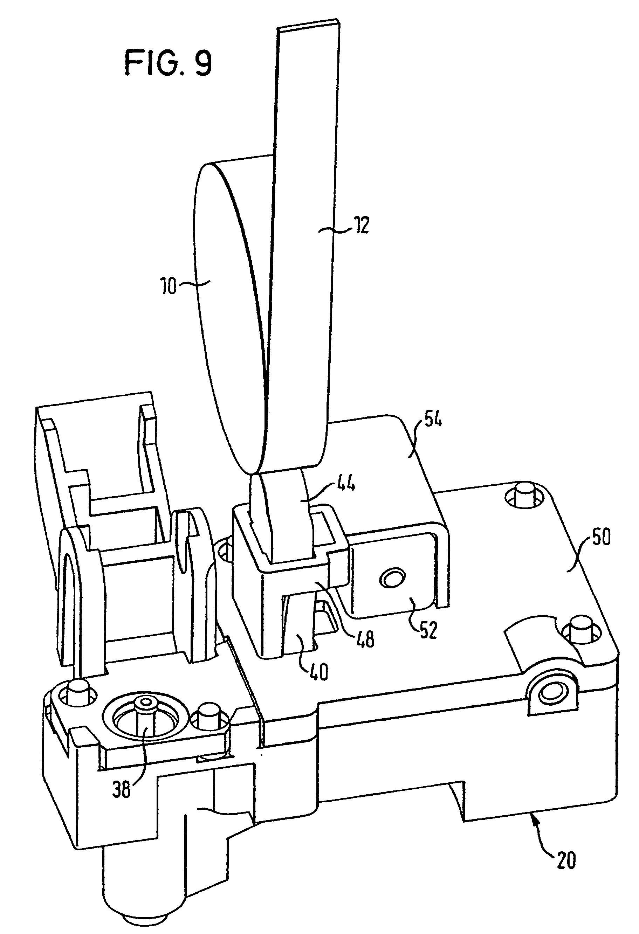

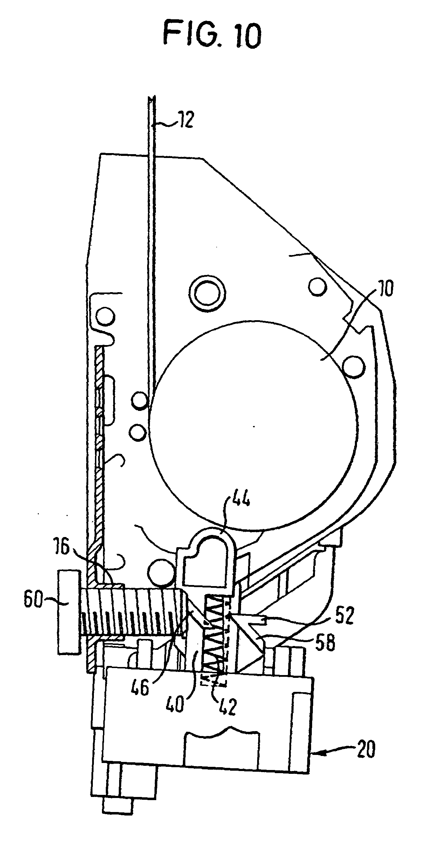

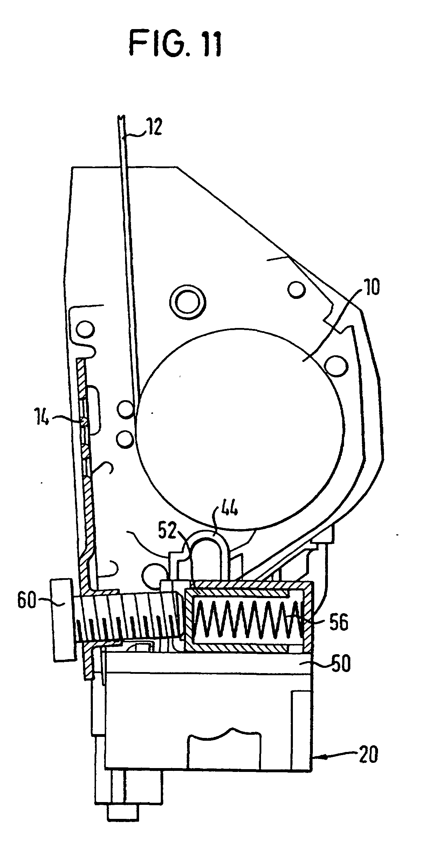

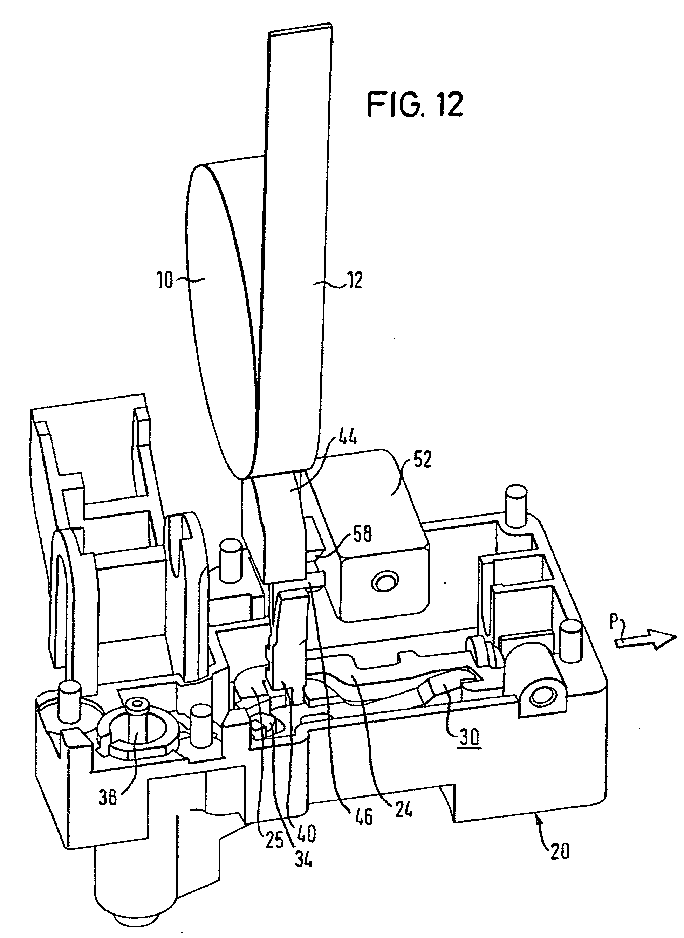

In den Figuren 9 bis 12 ist der Gurtaufroller in einem dritten Zustand gezeigt. Auch hier werden für die bereits bekannten Bauelemente dieselben Bezugszeichen verwendet, so daß auf die vorangegangene Beschreibung verwiesen werden kann.

In diesem dritten Zustand ist der Sensor 20 nicht gesichert, so daß der Gurtstraff-Mechanismus durch eine entsprechende Verzögerung in der Richtung des Pfeils P ausgelöst werden könnte. Der Transportsicherungsschieber 52 ist mittels einer Befestigungsschraube 60, die in den Gewindefortsatz 16 eingeschraubt ist, aus seiner Sicherungsstellung in die Freigabestellung bewegt worden, in der der Halteabschnitt 58 nicht mehr am Arretierabschnitt 46 des Sensorblockierschiebers angreift. Weiterhin ist eine gewisse Menge Gurtband vom Gurtaufroller abgezogen, so daß der Gurtbandwickel 10 einen Durchmesser hat, der einen vorbestimmten Durchmesser unterschreitet. Ab diesem vorbestimmten Durchmesser ist der Sensorblockierschieber 40 unter der Wirkung der ihn beaufschlagenden Feder 42 so weit zum Gurtbandwickel hin in seine Freigabestellung verschoben, daß er nicht mehr an der Nase 25 des Zwischenelementes 24 angreift. Das Zwischenelement kann daher von der Trägheitsmasse mitgenommen werden, wenn diese aus ihrer Ruhestellung in die Auslösestellung bewegt wird. In diesem Zustand, in welchem also der Gurtaufroller im Fahrzeug angebracht ist und außerdem der Sicherheitsgurt von einem Fahrzeuginsassen angelegt ist, kann der Gurtstraff-Mechanismus aktiviert werden.

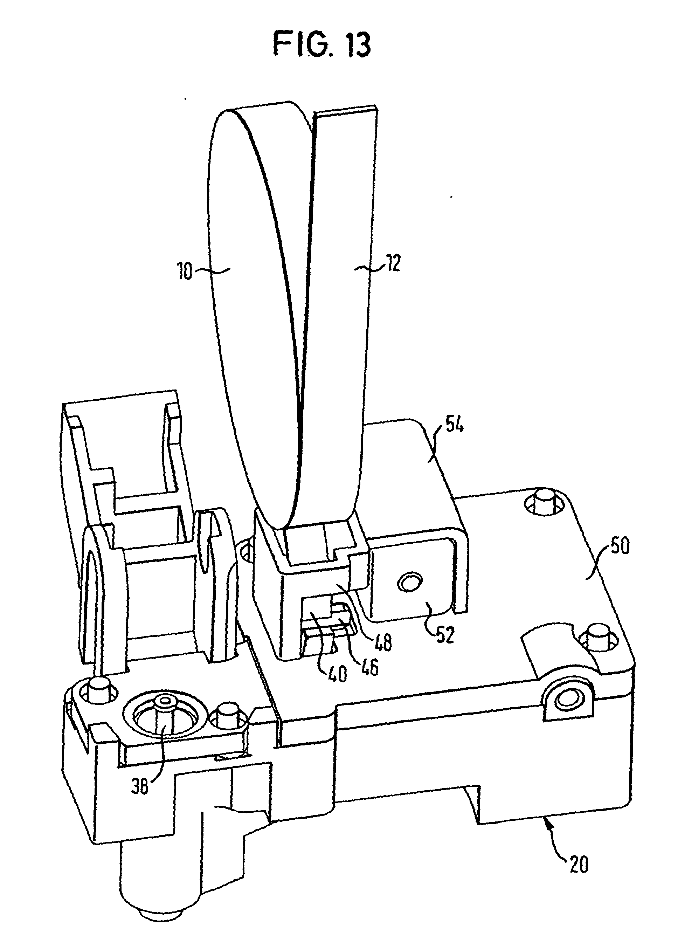

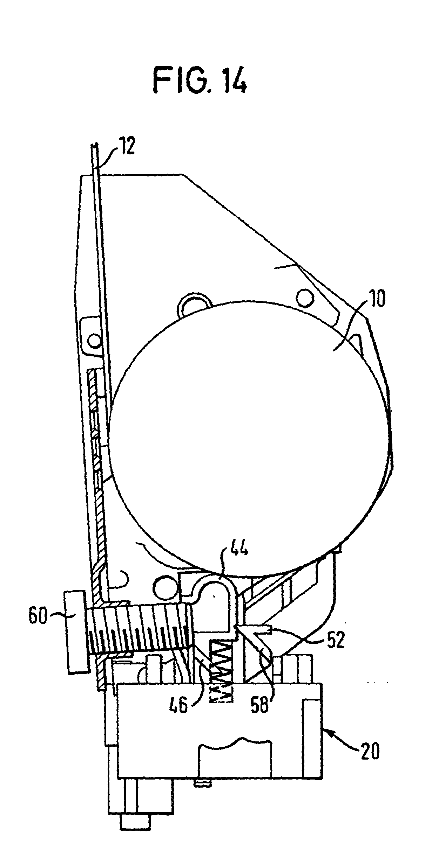

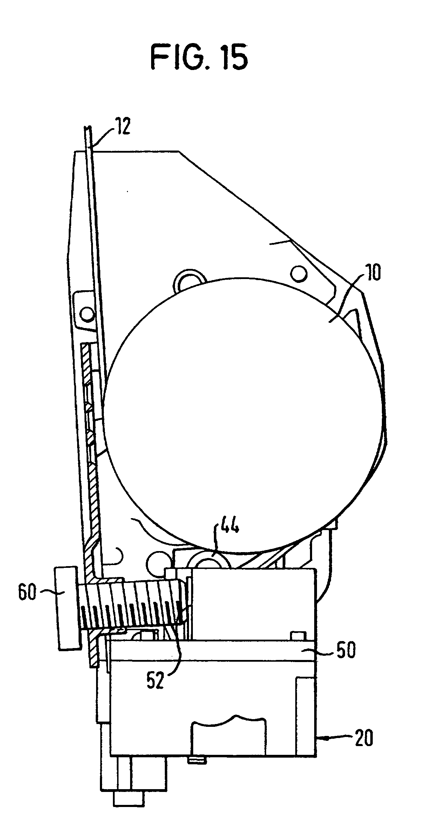

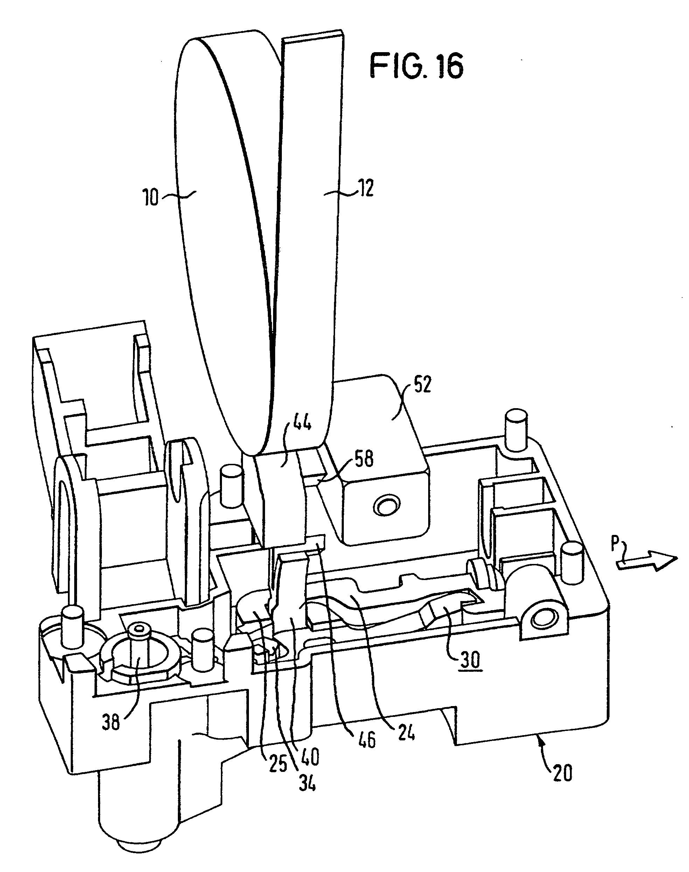

In den Figuren 13 bis 16 ist der Gurtaufroller in einem vierten Zustand gezeigt. Auch hier werden für die bereits bekannten Bauteile dieselben Bezugszeichen verwendet, so daß auf die vorangegangenen Erläuterungen verwiesen werden kann.

Im vierten Zustand ist der Gurtaufroller mittels der Befestigungsschraube 60 in einem Fahrzeug angebracht, wobei jedoch kein Gurtband vom Gurtaufroller abgezogen ist. Dieser Zustand liegt beispielsweise vor, wenn der Gurtaufroller den Sicherheitsgurt für den Beifahrersitz bereitstellt und der Beifahrersitz entweder unbesetzt ist oder der dort sitzende Fahrzeuginsasse nicht angegurtet ist. In diesem Zustand wird zwar der Transportsicherungsschieber 52 von der Befestigungsschraube 60 in seiner Freigabestellung gehalten, in welcher der Halteabschnitt 58 nicht am Arretierabschnitt 46 anliegt. Allerdings verhindert das am Gurtbandwickel 10 anliegende Tastelement 44, daß der Sensorblockierschieber 40 von seiner Feder 42 aus der Blockierstellung in die Freigabestellung gedrückt wird. Somit verhindert der Sensorblockierschieber 40, daß das Zwischenelement 24 von der Trägheitsmasse 22 mitgenommen wird.

Dies gewährleistet, daß der Gurtstraff-Mechanismus bei einem Unfall nicht aktiviert wird, da das Straffen des Sicherheitsgurtes, solange dieser nicht angelegt ist, sinnlos ist.

Wenn die Befestigungsschraube 60 wieder entfernt und der Gurtaufroller demontiert wird, gewährleistet die Feder 56, daß der Transportsicherungsschieber 52 wieder in seine Sicherungsstellung bewegt wird. In dieser wird der Sensorblockierschieber 40 mittels des Halteabschnittes 58 und des Arretierabschnittes 46 in die Blockierstellung gedrückt, in der eine Aktivierung des Gurtstraff-Mechanismus verhindert ist. Da der Transportsicherungsschieber 52 und der Sensorblockierschieber 40 beide translationsverschiebbar gelagert sind und die beiden Federn 56 und 42 Druckfedern sind, die mit der Zeit allenfalls eine sehr geringe Setzung erfahren, wird auch nach einer langen Einbauzeit von beispielsweise 15 Jahren gewährleistet, daß der Sensor 20 bei der Demontage des Gurtaufrollers zuverlässig gesichert wird.

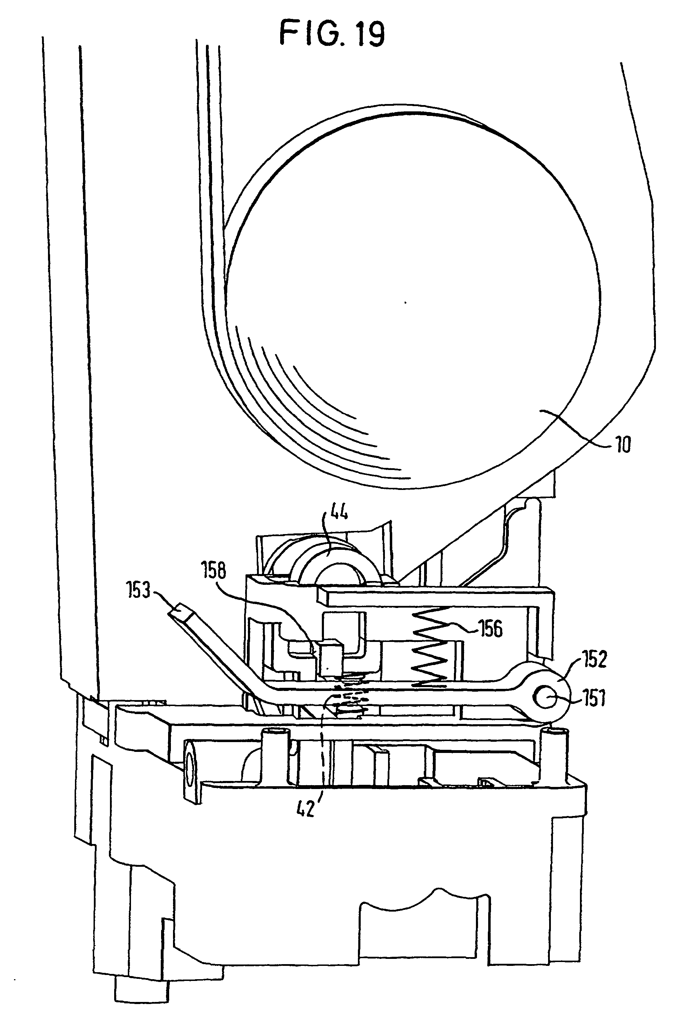

In den Figuren 19 bis 21 ist ein Gurtaufroller gemäß einer zweiten Ausführungsform der Erfindung gezeigt. Für die bereits von der ersten Ausführungsform bekannten Bauteile werden dieselben Bezugszeichen verwendet, und auf die obigen Erläuterungen der Funktion wird Bezug genommen.

In dieser Ausführungsform ist das Transportsicherungselement als Transportsicherungshebel 152 ausgebildet, der an einem Zapfen 151 drehbar gelagert ist und ein bezüglich Figur 19 nach oben abgekröpftes Ende 153 aufweist. Der Transportsicherungshebel 152 wird von einer Druckfeder 156 in seine Sicherungsstellung, bezüglich Figur 19 nach unten, beaufschlagt. Am Transportsicherungshebel 152 ist ein Halteabschnitt 158 ausgebildet, der sich am Arretierabschnitt 46 des Sensorblockierschiebers 40 abstützt und diesen entgegen der Beaufschlagung durch seine Feder 42 in die Blockierstellung drückt.

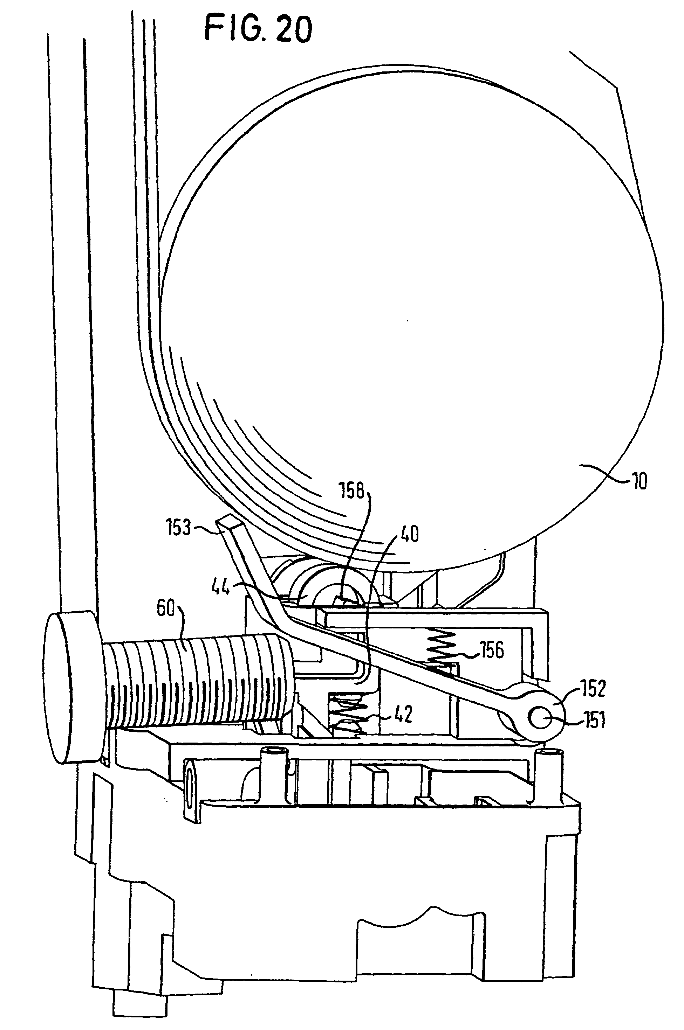

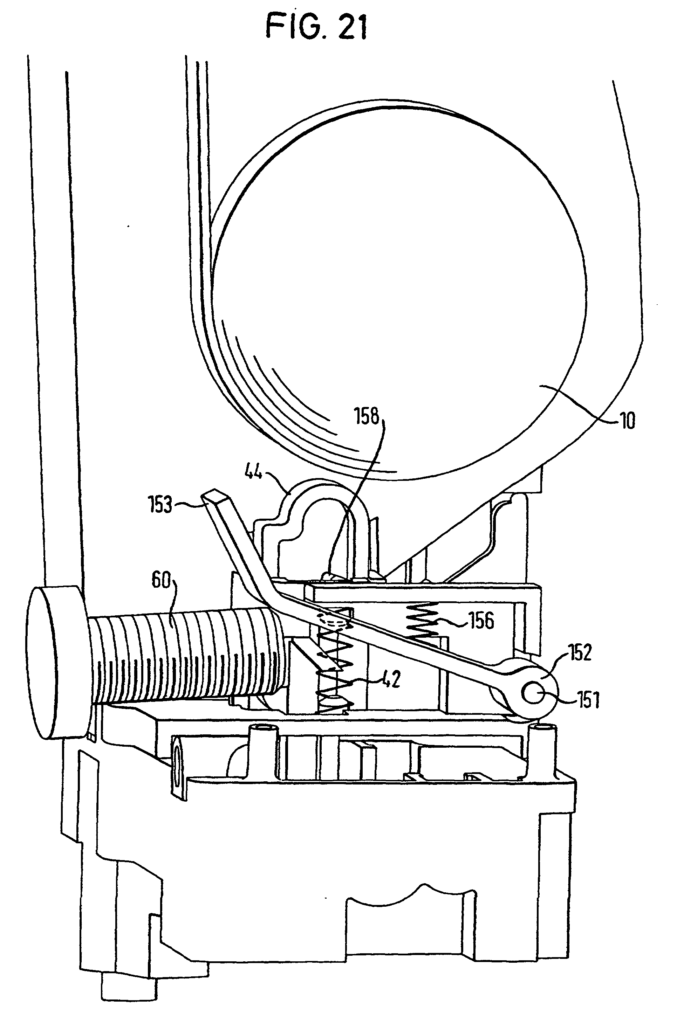

Der Transportsicherungshebel 152 wird aus seiner Sicherungsstellung, die in Figur 19 gezeigt ist, durch Eindrehen der Befestigungsschraube 60 in seine, in Figur 20 gezeigte Freigabestellung gebracht wobei die Befestigungsschraube 60 am gekröpften Ende 153 des Transportsicherungshebels 152 entlanggleitet und diesen bezüglich Figur 20 nach oben drückt. Auf diese Weise gibt der Halteabschnitt 158 den Sensorblockierschieber 40 frei, der nun unter der Wirkung der ihn beaufschlagenden Feder 42 zum Gurtbandwickel 10 hin verschoben wird. Der Sensorblockierschieber 40 liegt dabei mit seinem Tastelement 44 an dem Gurtbandwickel 10 an, so daß er bei einem vorbestimmten Durchmesser seine Freigabestellung, wie in Figur 21 gezeigt, erreicht. Die weitere Funktion entspricht derjenigen des Gurtaufrollers gemäß der ersten Ausführungsform.

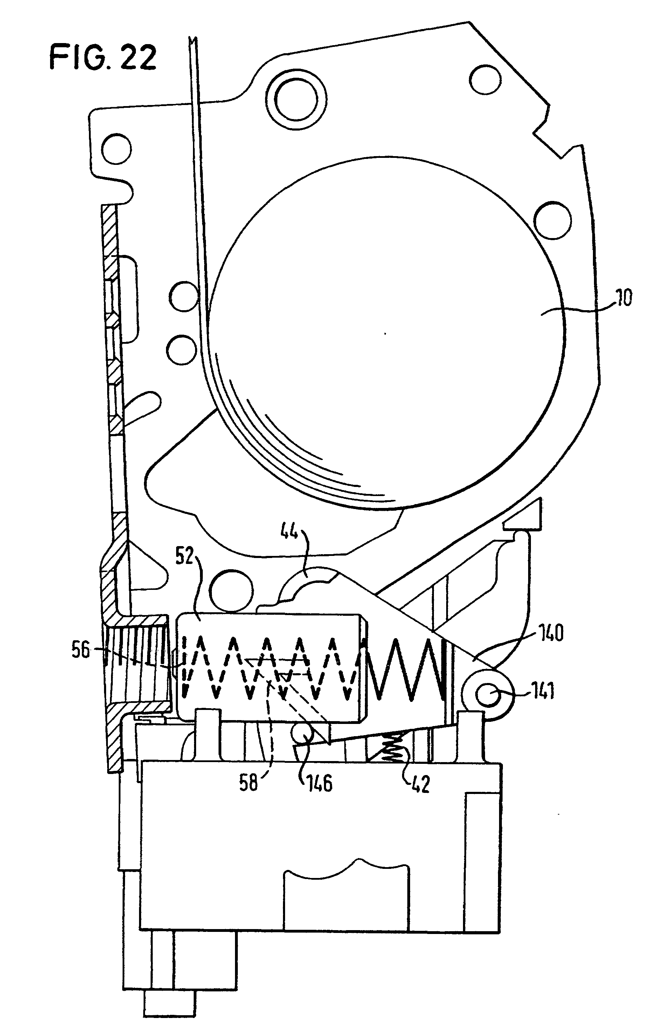

In den Figuren 22 bis 24 ist ein Gurtaufroller gemäß einer dritten Ausführungsform der Erfindung gezeigt. Für die bereits von den oben beschriebenen Ausführungsformen bekannten Bauteile werden wieder dieselben Bezugszeichen verwendet, und auf die obigen Erläuterungen der Funktion wird Bezug genommen.

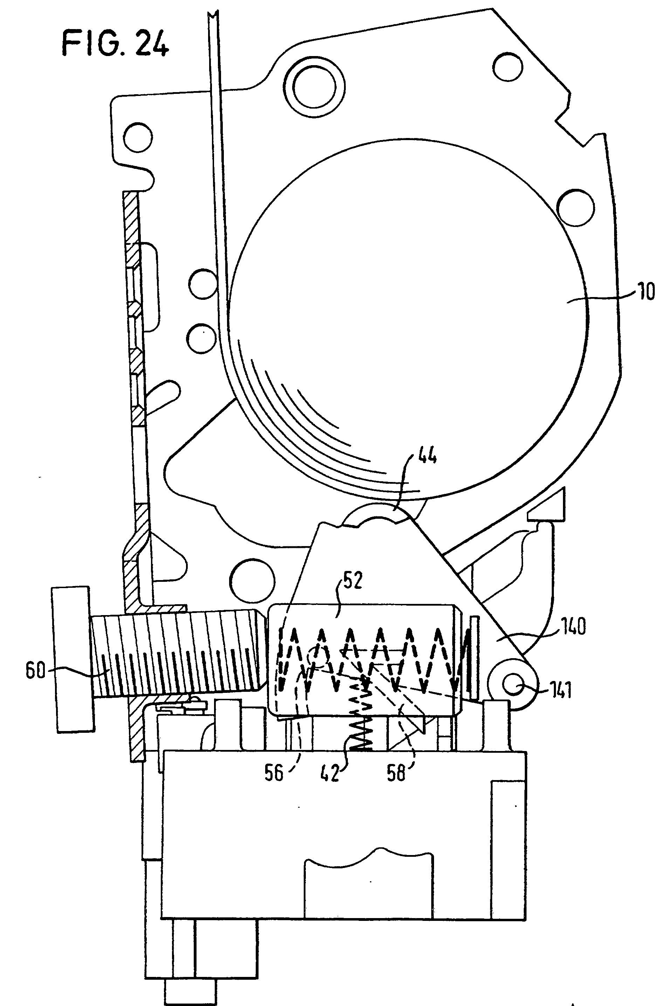

In dieser Ausführungsform ist das Sensorblockierelement als Sensorblockierhebel 140 ausgebildet, der an einem Zapfen 141 drehbar gelagert ist und durch die Feder 42 von einer, in Figur 22 gezeigten, Blockierstellung in eine Freigabestellung verschwenkt werden kann, die in Figur 24 dargestellt ist. Am Sensorblockierhebel 140 ist ein Arretierabschnitt 146 in Form eines Zapfens ausgebildet, an dem sich der Halteabschnitt 58 des Transportsicherungsschiebers 52 abstützt. An seinem vom Zwischenelement 24 abgewandten Ende ist der Sensorblockierhebel 140 mit einem Tastelement 44 versehen, das als einstückig mit dem Sensorblockierhebel 140 ausgebildete Nase ausgeführt ist. Das Tastelement 44 dient dazu, den Durchmesser des Gurtbandwickels 10 abzutasten.

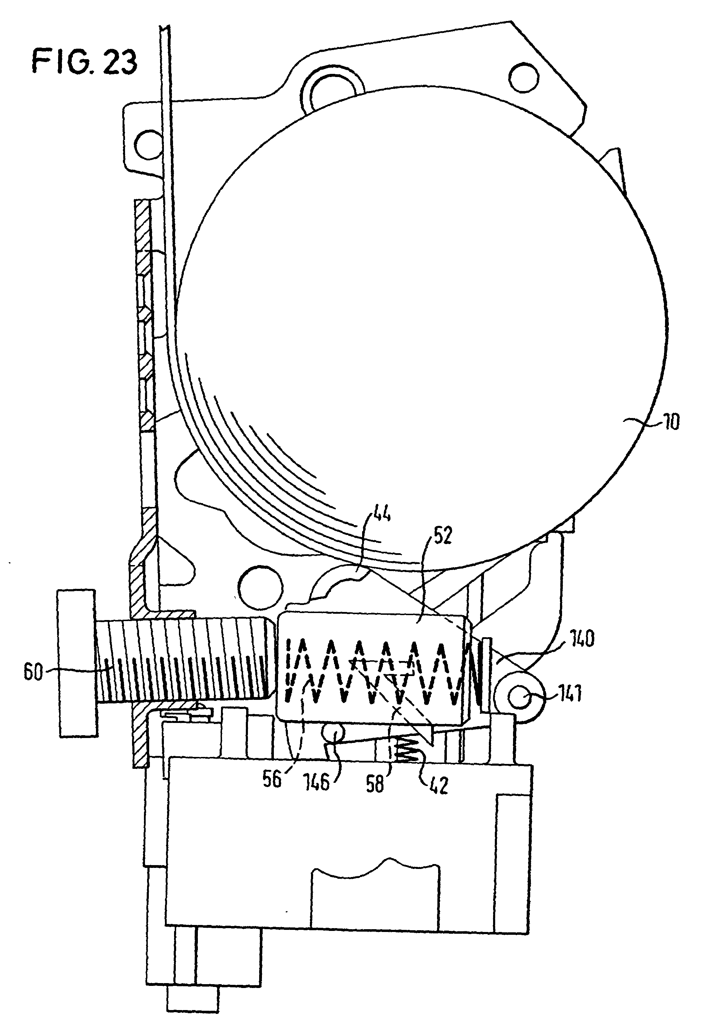

In Figur 22 befindet sich der Transportsicherungsschieber 52 in seiner Sicherungsstellung, in welcher der Halteabschnitt 58 des Transportsicherungsschiebers 52 an dem Arretierabschnitt 146 anliegt und dadurch den Sensorblockierhebel 140 entgegen der Kraft der Druckfeder 42 in der Blockierstellung hält. Sobald der Transportsicherungsschieber 52 durch Eindrehen der Befestigungsschraube 60 in seine Freigabestellung gebracht wird, wie in Figur 23 gezeigt, gibt der Halteabschnitt 58 den Arretierabschnitt 146 frei, so daß der Sensorblockierhebel 140 mit seinem Tastelement 44 am Gurtbandwickels 10 anliegen kann.

Wird der Durchmesser des Gurtbandwickels 10 durch Abziehen des Gurtbands verringert, dann schwenkt die Druckfeder 42 den Sensorblockierhebel 140 in Richtung des Gurtbandwickels 10, bis der Sensorblockierhebel 140 ab einem vorbestimmten Wert des Durchmessers seine Freigabestellung erreicht hat, wie in Figur 24 dargestellt.

Die weitere Funktion entspricht wieder derjenigen des Gurtaufrollers gemäß der ersten Ausführungsform.

## Patentansprüche

1. Gurtaufroller für ein Fahrzeug-Sicherheitsgurtsystem, mit einer Gurtspule, die den Sicherheitsgurt (12) aufnimmt, einem Gurtstraff-Mechanismus (18), der die Gurtspule in der Gurtband-Aufwickelrichtung beaufschlagen kann, und einem Sensor (20), der den Gurtstraff-Mechanismus auslösen kann und mit einer Sicherheitseinrichtung (40, 44, 52; 140; 152) versehen ist, die durch Montage des Gurtaufrollers in einem Fahrzeug aus einem Sicherungszustand, in welchem der Sensor (20) blockiert ist, in einen Freigabezustand überführbar ist, in welchem der Sensor (20) auslösebereit ist, wobei die Sicherheitseinrichtung (40, 44, 52; 140; 152) ein Sensorblockierelement (40; 140) aufweist, das zwischen einer Blockierstellung, in welcher der Sensor (20) blockiert ist, und einer Freigabestellung bewegbar ist, in welcher der Sensor (20) auslösebereit ist, **dadurch gekennzeichnet, daß** die Sicherheitseinrichtung (40, 44, 52; 140; 152) zusätzlich ein Transportsicherungselement (52; 152) und ein Tastelement (44) aufweist, daß das Tastelement (44) den Durchmesser des sich auf der Gurtspule befindenden Gurtbandwickels (10) abtastet und eine Bewegung des Sensorblockierelements (40; 140) in die Freigabestellung erst ermöglicht, wenn ein vorbestimmter Durchmesser unterschritten ist, daß das Transportsicherungselement (52; 152) zwischen einer Sicherungsstellung und einer Freigabestellung bewegbar ist, wobei eine Feder (56; 156) vorgesehen ist, die das Transportsicherungselement (52; 156) in die Sicherungsstellung beaufschlagt, daß eine Feder (42) vorgesehen ist, die das Sensorblockierelement (40; 140) in die Freigabestellung beaufschlagt, und daß das Transportsicherungselement (52; 152) einen Halteabschnitt aufweist (58; 158), der in der Sicherungsstellung des Transportsicherungselements (52; 152) an einem Arretierabschnitt (46; 146) des Sensorblockierelements (40; 140) angreift und dieses in der Blockierstellung hält.

2. Gurtaufroller nach Anspruch 1, **dadurch gekennzeichnet, daß** das Transportsicherungselement (52) und das Sensorblockierelement (40) als Schieber ausgebildet sind.

3. Gurtaufroller nach Anspruch 1, **dadurch gekennzeichnet, daß** das Sensorblockierelement (140) als Hebel ausgebildet ist.

4. Gurtaufroller nach Anspruch 1, **dadurch gekennzeichnet, daß** das Transportsicherungselement (152) als schwenkbarer Hebel ausgebildet ist.

5. Gurtaufroller nach einem der Ansprüche 1 und 2, **dadurch gekennzeichnet, daß** das Transportsicherungselement (52) und das Sensorblockierelement (40) in zueinander senkrechten Richtungen bewegbar sind.

6. Gurtaufroller nach einem der vorhergehenden Ansprüche, **dadurch gekennzeichnet, daß** die Federn Druckfedern (42, 56; 156) sind.

7. Gurtaufroller nach einem der vorhergehenden Ansprüche, **dadurch gekennzeichnet, daß** das Tastelement (44) einstückig mit dem Sensorblockierelement (40; 140) ausgebildet ist.

8. Gurtaufroller nach einem der vorhergehenden Ansprüche, **dadurch gekennzeichnet, daß** der Sensor (20) eine Trägheitsmasse (22) aufweist, die durch auf sie einwirkende Massenträgheitskräfte aus einer Ruhestellung in eine Auslösestellung überführt werden kann, daß ein Zwischenelement (24) vorgesehen ist, das von der Trägheitsmasse (22) mitgenommen wird, nachdem diese einen vorbestimmten Leerhub aus der Ruhestellung hin zur Auslösestellung zurückgelegt hat, und daß das Sensorblockierelement (40; 140), wenn es sich in seiner Blokkierstellung befindet, das Zwischenelement (24) blockiert.

9. Gurtaufroller nach einem der Ansprüche 1, 2 und 5 bis 8, **dadurch gekennzeichnet, daß** der Halteabschnitt (58) und der Arretierabschnitt (46) jeweils eine geneigte Fläche aufweisen, die sich in einem Winkel von etwa 45° zur Bewegungsrichtung des Transportsicherungselements (52) bzw. des Sensorblockierelements (40) erstreckt.

10. Gurtaufroller nach einem der vorhergehenden Ansprüche, **dadurch gekennzeichnet, daß** das Transportsicherungselement (52; 152) von einer Schraube (60) zur Montage des Gurtaufrollers im Fahrzeug in seine Freigabestellung bewegbar ist.

11. Gurtaufroller nach einem der vorhergehenden Ansprüche, **dadurch gekennzeichnet, daß** die das Sensorblockierelement (40; 140) beaufschlagende Feder (42) schwächer dimensioniert ist als die das Transportsicherungselement (52; 152) beaufschlagende Feder (56; 156).

## Claims

1. A belt retractor for a vehicle seat belt system, comprising a belt reel taking up the seat belt (12), a belt tensioning mechanism (18) capable of biasing the belt reel in the winding direction of the belt webbing, and a sensor (20) capable of triggering the belt tensioning mechanism and provided with a safety device (40, 44, 52; 140; 152) which, by installation of the belt retractor in a vehicle, is operable from a secured condition, in which the sensor (20) is blocked, into a released condition, in which the sensor (20) is ready to trigger, the safety device (40, 44, 52; 140; 152) including a sensor blocking element (40; 140) which is movable between a blocking position, in which the sensor (20) is blocked, and a release position, in which the sensor (20) is ready to trigger, **characterized in that** the safety device (40, 44, 52; 140; 152) additionally includes a transport locking element (52; 152) and a sensing element (44), that the sensing element (44) senses the diameter of the belt webbing coil (10) on the belt reel and does not allow a movement of the sensor blocking element (40; 140) into the release position until the diameter is below a predetermined value, that the transport locking element (52; 152) is movable between a locked position and a release position, a spring (56; 156) being provided which biases the transport locking element (52; 152) into the locked position, that a spring (42) is provided which biases the sensor blocking element (40; 140) into the release position, and that the transport locking element (52; 152) includes a retaining section (58; 158) which in the locked position of the transport locking element (52; 152) engages an arresting section (46; 146) of the sensor blocking element (40; 140) and maintains it in the blocking position.

2. The belt retractor as set forth in claim 1, **characterized in that** the transport locking element (52) and the sensor blocking element (40) are formed as sliders.

3. The belt retractor as set forth in claim 1, **characterized in that** the sensor blocking element (140) is formed as a lever.

4. The belt retractor as set forth in claim 1, **characterized in that** the transport locking element (152) is formed as a pivotable lever.

5. The belt retractor as set forth in any of claims 1 and 2, **characterized in that** the transport locking element (52) and the sensor blocking element (40) are movable in directions perpendicular to each other.

6. The belt retractor as set forth in any of the preceding claims, **characterized in that** the springs (42, 56; 156) are compression springs.

7. The belt retractor as set forth in any of the preceding claims, **characterized in that** the sensing element (44) is formed integrally with the sensor blocking element (40; 140).

8. The belt retractor as set forth in any of the preceding claims, **characterized in that** the sensor (20) includes an inertial mass (22) which can be operated from a neutral position into a trigger position by the forces of mass inertia acting thereon, that an intermediate element (24) is provided which is entrained by the inertial mass (22) once this inertial mass has executed a predetermined idle stroke from the neutral position towards the trigger position, and that the sensor blocking element (40; 140) blocks the intermediate element (24) when the sensor blocking element (40; 140) is in its blocking position.

9. The belt retractor as set forth in any of claims 1, 2 and 5 to 8, **characterized in that** the retaining section (58) and the arresting section (46) each feature an inclined surface area oriented at an angle of approximately 45° to the direction of movement of the transport locking element (52) and of the sensor blocking element (40), respectively.

10. The belt retractor as set forth in any of the preceding claims, **characterized in that** the transport locking element (52; 152) is movable into its release position by a screw (60) for mounting the belt retractor in the vehicle.

11. The belt retractor as set forth in any of the preceding claims, **characterized in that** the spring (42) biasing the sensor blocking element (40; 140) is dimensioned weaker than the spring (56; 156) biasing the transport locking element (52; 152).

## Revendications

1. Enrouleur de ceinture pour un système de ceinture de sécurité, comportant une bobine de ceinture qui reçoit la ceinture de sécurité (12), un mécanisme de tension de ceinture (18) qui peut solliciter la bobine de ceinture dans la direction d'enroulement de la sangle de ceinture, et un capteur (20) qui peut déclencher le mécanisme de tension de ceinture et est pourvu d'un dispositif de sécurité (40, 44, 52 ; 140 ; 152) qui, par le montage de l'enrouleur de ceinture dans un véhicule, peut être amené depuis un état de sécurité dans lequel le capteur (20) est bloqué, jusque dans un état de libération dans lequel le capteur (20) est prêt au déclenchement, le dispositif de sécurité (40, 44, 52 ; 140 ; 152) présentant un élément de blocage de capteur (40 ; 140) qui peut être déplacé entre une position de blocage, dans laquelle le capteur (20) est bloqué, et une position de libération, dans laquelle le capteur (20) est prêt au déclenchement, **caractérisé en ce que** le dispositif de sécurité (40, 44, 52 ; 140 ; 152) présente additionnellement un élément de sécurité au transport (52 ; 152) et un élément palpeur (44), **en ce que** l'élément palpeur (44) palpe le diamètre du rouleau de sangle de ceinture (10) se trouvant sur la bobine de ceinture et ne permet un mouvement de l'élément de blocage de capteur (40 ; 140) jusque dans la position de libération qu'en dessous d'un diamètre prédéterminé, **en ce que** l'élément de sécurité au transport (52 ; 152) peut être déplacé entre une position de sécurité et une position de libération, un ressort (56 ; 156) étant prévu, lequel sollicite l'élément de sécurité au transport (52 ; 152) jusque dans la position de sécurité, **en ce qu'**il est prévu un ressort (42) qui sollicite l'élément de blocage de capteur (40 ; 140) jusque dans la position de libération, et **en ce que** l'élément de sécurité au transport (52 ; 152) présente un tronçon de retenue (58 ; 158) qui, dans la position de sécurité de l'élément de sécurité au transport (52 ; 152), s'engage sur un tronçon d'arrêt (46 ; 146) de l'élément de blocage de capteur (40 ; 140) et retient celui-ci dans la position de blocage.

2. Enrouleur de ceinture selon la revendication 1, **caractérisé en ce que** l'élément de sécurité au transport (52) et l'élément de blocage de capteur (40) sont réalisés sous forme de poussoirs.

3. Enrouleur de ceinture selon la revendication 1, **caractérisé en ce que** l'élément de blocage de capteur (140) est réalisé sous forme de levier.

4. Enrouleur de ceinture selon la revendication 1, **caractérisé en ce que** l'élément de sécurité au transport (152) est réalisé sous forme de levier pivotant.

5. Enrouleur de ceinture selon l'une des revendications 1 et 2, **caractérisé en ce que** l'élément de sécurité au transport (52) et l'élément de blocage de capteur (40) sont déplaçables dans des directions perpendiculaires l'une à l'autre.

6. Enrouleur de ceinture selon l'une des revendications précédentes, **caractérisé en ce que** les ressorts sont des ressorts de compression (42, 56 ; 156).

7. Enrouleur de ceinture selon l'une des revendications précédentes, **caractérisé en ce que** l'élément palpeur (44) est réalisé d'un seul tenant avec l'élément de blocage de capteur (40 ; 140).

8. Enrouleur de ceinture selon l'une des revendications précédentes, **caractérisé en ce que** le capteur (20) présente une masse d'inertie (22) qui peut être amenée par les forces d'inertie de masse agissant sur elle, depuis une position de repos jusque dans une position de déclenchement, **en ce qu'**il est prévu un élément intermédiaire (24) qui est entraîné par la masse d'inertie (22) après que celle-ci a parcouru une course à vide depuis la position de repos jusque dans la position de déclenchement, et **en ce que** l'élément de blocage de capteur (40 ; 140), lorsqu'il se trouve dans sa position de blocage, bloque l'élément intermédiaire (24).

9. Enrouleur de ceinture selon l'une des revendications 1, 2 et 5 à 8, **caractérisé en ce que** le tronçon de retenue (58) et le tronçon d'arrêt (46) présentent chacun une surface inclinée qui s'étend sous un angle d'approximativement 45° par rapport à la direction de mouvement de l'élément de sécurité au transport (52) et de l'élément de blocage de capteur (40), respectivement.

10. Enrouleur de ceinture selon l'une des revendications précédentes, **caractérisé en ce que** l'élément de sécurité au transport (52 ; 152) est déplaçable par une vis (60) jusque dans sa position de libération pour monter l'enrouleur de ceinture dans le véhicule.

11. Enrouleur de ceinture selon l'une des revendications précédentes, **caractérisé en ce que** le ressort (45) sollicitant l'élément de blocage de capteur (40 ; 140) a des dimensions plus faibles que le ressort (56 ; 156) sollicitant l'élément de sécurité de transport (52 ; 152).
